# EUROPÄISCHE PATENTANMELDUNG

(11) **EP 1 293 896 A1**
(43) Veröffentlichungstag der Anmeldung: **19.03.2003**
(21) Anmeldenummer: 01122129.8
(22) Anmeldetag: 14.09.2001
(51) Int. Cl.: G06F 9/45

(54) **Verfahren zum Betrieb eines Rechnersystems mit einem Funktionsbaustein sowie Funktionsbaustein**

(71) Anmelder: SIEMENS AKTIENGESELLSCHAFT, 80333 München (DE)
(72) Erfinder: Lomakin, Dimitri, Dr., 90491 Nürnberg (DE)

(57) **Zusammenfassung**

Es wird ein Verfahren zum Betrieb eines Rechnersystems (1) mit einem Prozessor (2) und einem Funktionsbaustein (8) sowie ein Funktionsbaustein (8) selbst angegeben, wobei der Funktionsbaustein (8) einen Parser (14) und einen Termeingang (15) aufweist, wobei dem Funktionsbaustein (8) am Termeingang (15) ein Term (9) zugeführt wird, wobei der Parser (14) anhand des Terms (9) eine Liste (20) mit mindestens einem Listenelement (21) erzeugt und wobei jedes Listenelement (21) in eine vom Prozessor (2) ausführbare Anweisung transformiert wird.

## Beschreibung

Die Erfindung betrifft ein Verfahren zum Betrieb eines Rechnersystems mit einem Funktionsbaustein. Sie betrifft weiter einen solchen Funktionsbaustein.

Rechnersysteme mit einem Prozessor sind allgemein bekannt. Auf dem Rechnersystem werden durch den Prozessor ein oder mehrere Steuerprogramme ausgeführt. Für unterschiedlichste Anwendungsfälle sind jeweils spezifische Steuerprogramme vorgesehen.

Als Funktionsbaustein wird ein definierter Abschnitt des Steuerprogramms bezeichnet. Funktionsbausteine gliedern das Steuerprogramm in ähnlicher Weise, wie Kapitel ein Buch gliedern. Jeder Funktionsbaustein ist eine Art Steuerprogramm im Steuerprogramm. Damit entspricht ein Funktionsbaustein dem ausführbaren Pendant eines Unterprogramms, einer Prozedur, einer Routine oder einer Instanz eines Objekttyps gemäß der Terminologie geläufiger so genannter höherer Programmiersprachen wie PASCAL, C, C++ oder JAVA.

In jeder höheren Programmiersprache ist eine spezielle Syntax vorgesehen, mittels derer Unterprogramme oder Routinen definiert werden. Die Unterprogramme oder Routinen sind erst nach einer Übersetzung in ein für den Prozessor des Rechnersystems verständliches Format durch diesen ausführbar. Die Übersetzung erfolgt durch einen so genannten Compiler oder Assembler oder durch ein Transformationsprogramm mit entsprechender Funktionalität. Ein auf diese Weise übersetztes oder transformiertes Unterprogramm bildet einen Funktionsbaustein, der - kombiniert mit ggf. weiteren Funktionsbausteinen - schließlich das Steuerprogramm bildet.

Es sind bereits Funktionsbausteine bekannt, die zur Durchführung von mathematischen Grundoperationen vorgesehen sind. Derartige Funktionsbausteine haben eine feste so genannte Schnittstelle mit einer Anzahl von Eingabeparametern und mindestens einem Ausgabeparameter. Ein Funktionsbaustein zur Durchführung einer Addition zweier Summanden hat z.B. eine Schnittstelle mit zwei Eingabeparametern und einem Ausgabeparameter. Ein Eingabeparameter wird auch kurz als Eingang des Funktionsbausteins und entsprechend ein Ausgabeparameter als Ausgang des Funktionsbausteins bezeichnet. Zur Durchführung einer Addition werden demnach einem entsprechenden Funktionsbaustein an seinen beiden Eingängen die Summanden zugeführt. Die resultierende Summe kann am Ausgang abgerufen werden.

Wie leicht einzusehen ist, ist es nicht möglich, für jede denkbare Operation einen entsprechenden Funktionsbaustein vorzusehen. Man hat sich daher darauf beschränkt, Funktionsbausteine für die Grundrechenarten sowie für gebräuchliche mathematische Funktionen und Operationen vorzuhalten. Durch eine geeignete "Verschaltung" solcher vordefinierter Funktionsbausteine zu einem Netzwerk, z.B. indem der Ausgang eines ersten Funktionsbausteins einem weiteren Funktionsbaustein an einem seiner Eingänge zugeführt wird, können auch komplexere mathematische Funktionen realisiert werden.

Nachteilig ist jedoch, dass im Falle einer Änderung der zugrundeliegenden Operation häufig auch eine Änderung des Netzwerkes aus Funktionsbausteinen und untereinander bestehender Verschaltung erforderlich ist. Dies ist aufwendig und vor allem bei umfangreichen Operationen und entsprechend komplexen Netzwerken von Funktionsbausteinen unübersichtlich und damit fehleranfällig.

Andererseits besteht die Möglichkeit, eine Operation mit den Sprachmitteln einer Programmiersprache auszudrücken. Zur Berechnung einer mathematischen Funktion oder eines logischen Ausdrucks, im folgenden mit dem Oberbegriff Term zusammengefasst, kann ein Unterprogramm mit einer Schnittstelle mit Eingangs- und Ausgangsparametern definiert werden. Wenn das Unterprogramm übersetzt ist, bildet es einen Funktionsbaustein, der speziell zur Berechnung des enthaltenen Terms geeignet ist. Eine Änderung des Terms erfordert damit eine Änderung des Unterprogramms, sodann die Generierung eines Funktionsbausteins aus dem Unterprogramm und die Integration des angepassten Funktionsbausteins in das Steuerprogramm. Dies ist in nachteilige Weise zeitaufwendig. Erschwerend kommt noch hinzu, dass zur Änderung des Terms Kenntnisse in der jeweiligen Programmiersprache sowie die Mittel (z.B. ein Compiler und ein Linker) zur Generierung eines Funktionsbausteins und zur Integration desselben in das Steuerprogramm erforderlich sind. Zudem haben heute gebräuchliche Compiler einen Umfang von mehreren Megabyte und werden deshalb auf einem Rechnersystem, auf dem ein Steuerprogramm zu Steuerung und/oder Überwachung eines technischen Prozesses abläuft, üblicherweise nicht vorgehalten.

Ferner sind zur Analyse eines Terms während der Laufzeit eines Steuerprogramms bereits Unterprogramme oder Routinen, so genannte Parser, bekannt, die einen Algorithmus zur automatischen Syntaxanalyse (vgl. Brinkmann: Wörterbuch der Datenund Kommunikationstechnik; Brandstetter, 1989) enthalten. Ein solcher Parser ist geeignet, einen als Parameter übergebenen Term, z.B. eine mathematische Formel, zu analysieren. Die Analyse umfasst dabei das Erkennen der einzelnen Elemente des Terms, z.B. der Operanden und Operationsbezeichner einer mathematischen Formel. Der Parser generiert eine Datenstruktur, z.B. einen so genannten Binärbaum, in welche die erkannten Elemente eingetragen werden. Der Term ist damit in eine Datenstruktur transformiert worden. Zur Auswertung des Terms wird mittels eines speziellen Algorithmus die Datenstruktur interpretiert.

Der Nachteil beim Einsatz eines Parsers besteht vor allem darin, dass die Analyse des Terms und die anschließende Interpretation der erzeugten Datenstruktur zeitaufwendig ist und dass die dafür erforderliche Zeit die Laufzeit des Steuerprogramms erhöht. Dies ist vor allem dann nachteilig, wenn das Steuerprogramm zur Regelung technischer Prozesse vorgesehen ist und das Steuerprogramm mittels entsprechender, bekannter Algorithmen eine so genannte Abtastregelung durchführt. Für die Abtastregelung ist es wesentlich, dass das Einlesen von Maßwerten aus dem zu regelnden technischen Prozess zu äquidistanten Zeitpunkten erfolgt. Eine zur Laufzeit des Steuerprogramms durchgeführte Analyse einer mathematischen Funktion, z.B. einer Regelfunktion, mittels eines Parsers kann so viel Zeit beanspruchen, dass sich die Äquidistanz der Abtastung nicht gewährleisten lässt.

Schließlich belegt sowohl das Unterprogramm mit dem Parser als auch die von diesem erzeugte Datenstruktur wertvollen Speicher. Dies kann es erforderlich machen, die Hardware, auf der das Steuerprogramm abläuft, mit einem größeren Speicher auszustatten, was die Hardware insgesamt verteuert.

Der Erfindung liegt daher die Aufgabe zugrunde, eine Möglichkeit anzugeben, mit der ein in einem Steuerprogramm enthaltener Term zur Laufzeit bei Vermeidung der oben genannten Nachteile änderbar ist.

Diese Aufgabe wird erfindungsgemäß mit den Merkmalen der Ansprüche 1 oder 13 gelöst. Gemäß Anspruch 1 ist dazu ein Verfahren zum Betrieb eines Rechnersystems mit einem Prozessor und einem Funktionsbaustein vorgesehen, wobei der Funktionsbaustein einen Parser und einen Termeingang aufweist, wobei dem Funktionsbaustein am Termeingang ein Term zugeführt wird, wobei der Parser anhand des Terms eine Liste mit mindestens einem Listenelement erzeugt, und wobei jedes Listenelement in eine vom Prozessor ausführbare Anweisung transformiert wird.

Vorteilhafte Weiterbildungen des Verfahrens sind Gegenstand der Ansprüche 2 bis 12.

Gemäß Anspruch 13 ist ein Funktionsbaustein mit einem Parser und einem Termeingang zur Verwendung in einem durch einen Prozessor gesteuerten Rechnersystem vorgesehen, wobei am Termeingang ein Term zuführbar ist, wobei der Term durch den Parser analysierbar und in eine Liste mit mindestens einem Listenelement umsetzbar ist und wobei jedes Listenelement in eine vom Prozessor ausführbare Anweisung transformierbar ist.

Zweckmäßige Ausgestaltungen des Funktionsbausteins sind Gegenstand der Ansprüche 14 bis 18. Ein Funktionsbaustein ist dabei, wie eingangs bereits erläutert, ein definierter Abschnitt eines Steuerprogramms. Er entspricht dem ausführbaren Pendant eines Unterprogramms, einer Prozedur, einer Routine oder einer Instanz eines Objekttyps.

Die mit der Erfindung erzielten Vorteile bestehen insbesondere darin, dass durch eine Umwandlung des Terms in eine Liste auch eine Berechnung zur Laufzeit des Steuerprogramms veränderter Terme möglich wird. Diese Berechnung erfolgt besonders schnell, weil die generierte Liste Listenelemente in einem solchen Format oder mit einem solchen Inhalt umfasst, dass sie in vom Prozessor ausführbare Anweisungen transformierbar sind. Der Parser erzeugt mit der Liste eine Darstellung des Terms in einem Metaformat, das nach einer einfachen Transformation durch den Prozessor ausführbar ist. Man kann daher auch sagen, dass der Funktionsbaustein eine Funktionalität umfasst, die der eines Compilers entspricht, der auch aus einem im Source-Code angegebenen Term eine Folge von Anweisungen für den Prozessor generiert.

Der Transformationsvorgang beim Abarbeiten der Liste wird vorteilhaft eingespart, wenn das Listenelement bereits eine vom Prozessor ausführbare Anweisung darstellt oder eine solche zumindest beinhaltet.

Wenn die Liste eine Postfixdarstellung, z.B. in Form der so genannten umgekehrten polnischen Notation - reverse polish notation (RPN) - des Terms ist, ist eine lineare Abarbeitung der Liste in der Form möglich, dass zunächst das erste Listenelement und darauf sukzessiv immer das nächst folgende Listenelement abgearbeitet wird.

Die sukzessive Ausführung / Abarbeitung einer jeden Anweisung / eines jeden Listenelements liefert nach jeder Anweisung ein Zwischenergebnis und nach der letzten Anweisung schließlich ein Ergebnis, das vorteilhaft an mindestens einem ersten Ausgang des Funktionsbausteins abgerufen werden kann.

Vorteilhaft ist in Abhängigkeit vom Ergebnis zumindest ein weiterer Ausgang generierbar. Ein erster weiterer Ausgang wird z.B. generiert, wenn sich bei der Ermittlung des Ergebnisses ergibt, dass ein so genannter Registerüberlauf stattgefunden hat. Ein zweiter weiterer Ausgang wird z.B. generiert, wenn des Ergebnis oder Teilergebnisse, die in das Ergebnis einfließen, für den oder die zugeführten Parameter nicht definiert ist

Vorteilhaft bezieht sich jede vom Prozessor ausführbare Anweisung entweder auf eine spezielle Speicherzelle, insbesondere den so genannten Akkumulator, oder auf einen Stapelspeicher, insbesondere den so genannten Stack, wobei durch eine Ausführung einer Anweisung, die sich auf den Stapelspeicher bezieht, entweder ein Datum in dem Stapelspeicher abgelegt oder aus dem Stapelspeicher entfernt wird. Dies ermöglicht die Berechnung des Terms in sukzessiv aufeinander folgenden Schritten, wobei als Datum das Zwischenergebnis eines jeden Schrittes zur evtl. Weiterverwendung durch den nachfolgenden Schritt gespeichert wird und zwar entweder in der speziellen Speicherzelle oder in dem Stapelspeicher.

Wenn der Term mindestens einen Parameter umfasst und jeder Parameter bei der Auswertung des Terms durch den Parser zu einem Listenelement und dieses zu einer Anweisung führt, mit der der Wert des Parameters entweder in die spezielle Speicherzelle geschrieben wird oder mit deren Inhalt verknüpft wird, ergibt sich eine besonders einfach Konstellation hinsichtlich der Auswertung derjenigen Elemente des Terms, bei denen keine Abspeicherung von Teilergebnissen erforderlich ist.

Vorteilhaft ergibt sich für jeden Operator, z.B. "+", "-", "sin", "log", etc., den der Term umfasst, eine Anweisung, mit welcher der Wert eines dem Operator und der damit spezifizierten Operation zugehörigen Parameters mit dem aktuellen Inhalt der speziellen Speicherzelle verknüpft wird. Wenn die spezielle Speicherzelle der Akkumulator, kurz Akku, ist und der Term z.B. die Addition, Multiplikation oder Division, kurz Operation (OP), mehrerer Parameter "a", "b", "c", "d" und "e" vorsieht, ergibt sich eine Folge von Anweisungen der Form:
Akku : = a
Akku := Akku OP b
Akku := Akku OP c
Akku := Akku OP d
Akku := Akku OP e
Damit ist ersichtlich, dass unter Verwendung des Akkumulators bei geeignet erzeugten Listenelementen und damit korrespondierenden Anweisungen die Berechnung des Terms sehr gut mittels sukzessiv nacheinander ausführbarer Schritte realisierbar ist.

Wenn zur Berechnung des Ergebnisses des Terms die Ermittlung eines Teilergebnisses erforderlich ist, wird das Teilergebnis vorteilhaft im Stapelspeicher abgelegt. Dann kann für die Berechnung solcher Abschnitte des Terms, die keine Ermittlung von Teilergebnissen erfordert, die spezielle Speicherzelle verwendet werden und der Inhalt der speziellen Speicherzelle als Teilergebnis im Stapelspeicher abgelegt und von dort bei Bedarf wieder abgerufen werden.

Wenn der Funktionsbaustein neben dem Termeingang mindestens einen Parametereingang aufweist und der mindestens eine Parameter am Parametereingang zugeführt wird, ergibt sich vorteilhaft eine definierte Schnittstelle zur Versorgung des Funktionsbausteins mit dem mindestens einen Parameter des Terms.

Weiter vorteilhaft wird für jeden weiteren Parameter des Terms jeweils genau ein zusätzlicher Parametereingang generiert, so dass für jeden Parameter genau ein Eingang des Funktionsbausteins zur Verfügung steht. Und zwar der genannte Parametereingang für den ersten bzw. einzigen Parameter des Terms und für jeden weiteren Parameter jeweils genau ein weiterer Parametereingang.

Um eine unnötige mehrfache Generierung der Liste zu vermeiden, insbesondere dann, wenn die Liste bereits der Postfixdarstellung des Terms entspricht, ist vorteilhaft ein Merker vorgesehen. Dieser Merker des Funktionsbausteins wird nach vollständiger Erzeugung der Liste auf einen ersten Wert und nach Zuführung eines neuen oder geänderten Terms auf einen zweiten Wert gesetzt. Damit ist anhand des Wertes des Merkers jederzeit erkennbar, ob die aktuelle Liste zur Berechnung des Ergebnisses noch verwendbar ist, oder ob erst eine neue Liste erzeugt werden muss, weil dem Funktionsbaustein an dessen Termeingang ein neuer oder geänderter Term zugeführt wurde.

Ein Ausführungsbeispiel der Erfindung wird nachfolgend anhand der Zeichnung näher erläutert. Darin zeigen:
- FIG 1: ein Rechnersystem,
- FIG 2: einen Term,
- FIG 3: einen speziellen Funktionsbaustein, und
- FIG 4: eine Liste mit Listenelementen.

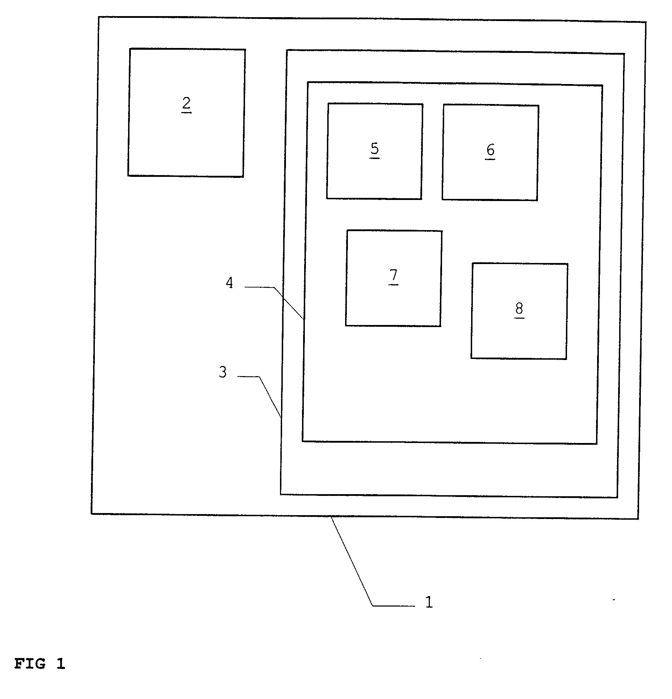

FIG 1 zeigt ein an sich bekanntes Rechnersystem 1 mit einem Prozessor 2 und einem Speicher 3. Im Speicher 3 befindet sich ein durch den Prozessor 2 ausführbares Steuerprogramm 4. Das Steuerprogramm 4 umfasst eine Anzahl von Funktionsbausteinen 5, 6, 7, 8. Jeder Funktionsbaustein 5-8 realisiert eine bestimmte Teilfunktion des Steuerprogramms 4.

Das Steuerprogramm 4 ist insbesondere zur Steuerung und/oder Überwachung eines nicht dargestellten externen technischen Prozesses, z.B. einer Hydraulikpresse, vorgesehen. Dabei ist z.B. jeweils einer der Funktionsbausteine 5-8 zur Steuerung eines Betriebsmittels der Hydraulikpresse vorgesehen. Einer der Funktionsbausteine 5-8 ist z.B. zur Steuerung eines Hydraulikaggregates (nicht dargestellt), ein anderer zur Verarbeitung von Sicherungsdaten die z.B. von einer Lichtschranke (nicht dargestellt) oder einem Not-Aus-Taster (gleichfalls nicht dargestellt) geliefert werden, vorgesehen.

Ein spezieller Funktionsbaustein 8 ist zur Durchführung von Berechnungen vorgesehen. Der spezielle Funktionsbaustein 8 wird nachfolgend stets kurz als Funktionsbaustein 8 bezeichnet, da die weitere Beschreibung sich nur noch auf den speziellen Funktionsbaustein 8 bezieht.

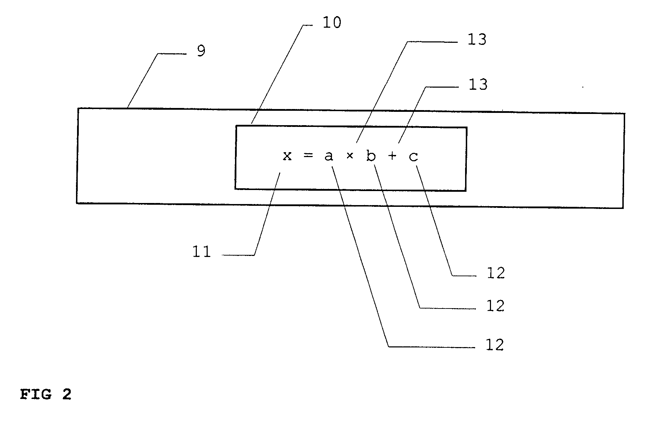

FIG 2 zeigt einen Term 9. Als Term 9 wird z.B. eine mathematischen Funktion oder ein logischer Ausdrucks bezeichnet. Exemplarisch ist als Term 9 eine mathematische Funktion 10 gewählt. Die mathematische Funktion 10 umfasst ein Funktionsergebnis 11, mehrere Operanden (a, b, c) 12 und Operationsbezeichner (+, x) 13, welche die Operanden 12 verknüpfen. Ein Operand 12 wird im folgenden auch als Parameter 12 und ein Operationsbezeichner 13 auch als Operator 13 bezeichnet.

Wie allgemein bekannt, sind Terme 9, die Operanden 12 aufweisen, die wiederum durch Operationsbezeichner 13 miteinander verknüpft sind, auch in einer so genannten Postfixdarstellung darstellbar. Der Ausdruck "a × b + c" der Funktion 10 lautet in Postfixdarstellung "a b × c +". Auf die Verwendung der Postfixdarstellung wird weiter unten eingegangen.

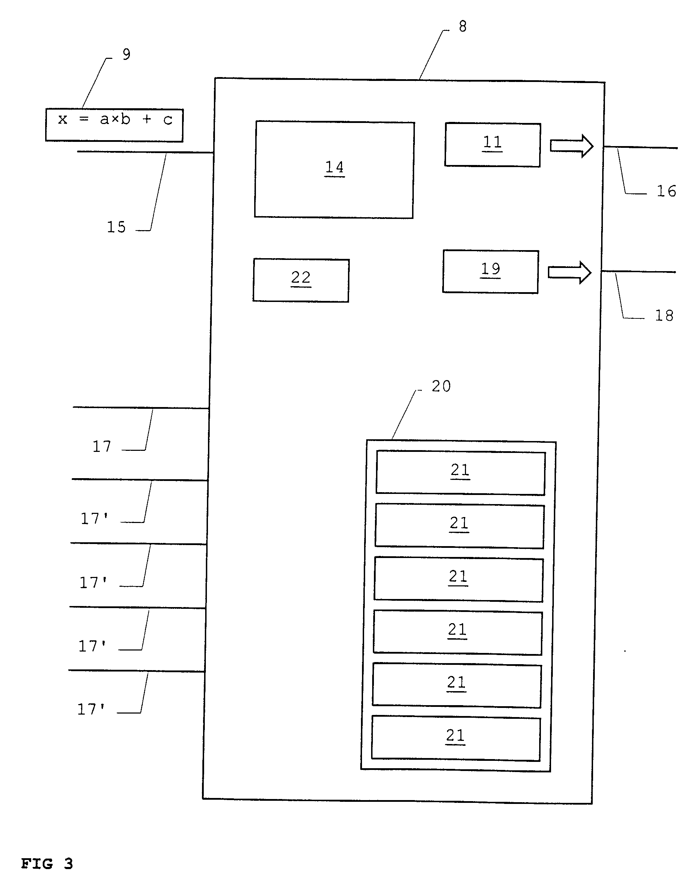

FIG 3 zeigt den speziellen Funktionsbaustein 8. Dieser umfasst einen Parser 14 und einen Termeingang 15. Am Termeingang 15 wird dem Funktionsbaustein 8 der Term 9 zugeführt. Exemplarisch ist in FIG 3 als Term 9 die mathematische Funktion "x=a×b+c" angegeben. Genauso kann als Term 9 eine logische Verknüpfung o.ä. vorgesehen sein.

Der Funktionsbaustein 8 umfasst ferner einen ersten Ausgang 16 an dem das Ergebnis 11 der Berechnung des Terms 9 abrufbar ist. Das Ergebnis 11 wird nach dessen Berechnung in einer dafür vorgesehenen Speicherzelle 11 abgespeichert und ist aus dieser über den ersten Ausgang 16 abrufbar. Neben dem Term eingang 15 ist ein erster Parametereingang 17 sowie weitere Parametereingänge 17' vorgesehen. An diesen sind dem Funktionsbaustein 8 die Werte einzelner Parameter 12 des Terms 9 übergebbar. Neben dem ersten Ausgang 16 ist zumindest ein weiterer Ausgang 18 vorgesehen. Dieser ist in Abhängigkeit vom Ergebnis 11 generierbar. Wenn z.B. bei der Ermittlung des Ergebnisses 11 ein so genannter Registerüberlauf auftritt, kann dies am weiteren Ausgang 18 signalisiert werden. Die Tatsache eines Registerüberlaufs oder eine sonstige Sonderkonstellation (ZERO, INFTY, CARRY, etc.) bei der Ermittlung des Ergebnisses 11 wird in einer dafür vorgesehenen Speicherzelle 19 kodiert. Beim Zugriff auf den weiteren Ausgang 18 wird der Inhalt dieser Speicherzelle entweder direkt oder nach einer geeigneten Transformation z.B. im Klartext zurückgeliefert. Alternativ oder optional wird z.B. ein zweiter weiterer Ausgang (nicht dargestellt) generiert, wenn das Ergebnis 11 oder auch ein Zwischenergebnis, das in das Ergebnis 11 einfließt, für den oder die zugeführten Parameter nicht definiert ist.

Der Parser 14 generiert anhand des Terms 9 eine Liste 20 mit mindestens einem Listenelement 21. Das oder jedes Listenelement 21 ist in eine vom Prozessor 2 ausführbare Anweisung transformierbar. Dies erfolgt mittels einer geeigneten eindeutigen Transformationsvorschrift, z.B. einem so genannten Look-Up-Table, mittels derer anhand des jeweiligen Listenelements 21 die geeignete Prozessoranweisung ausgewählt wird.

Eine solche Look-Up-Table könnte folgenden Inhalt haben: ( ["+", "ADD"], ["-", "SUB"], ["×", "MUL"], ... ). Wenn also der Term 9 den Operator 13 "-" (minus) enthält, wird das zugehörige Element der Look-Up-Table gesucht - hier ["-", "SUB"] - und die in der Look-Up-Table dem Operator 13 zugeordnete Anweisung - hier "SUB" - ausgeführt.

Besonders günstig ist es allerdings, wenn das Listenelement 21 die ausführbare Prozessoranweisung bereits beinhaltet oder schon selbst eine solche darstellt. Dann kann nämlich ein Transformationsvorgang wie z.B. mit einer Look-Up-Table entfallen.

In einem Merker 22, einer weiteren speziellen Speicherzelle 22, wird erfasst, ob der am Termeingang 15 zugeführte Term 9 durch den Parser 14 bereits vollständig ausgewertet und in die Liste 20 umgesetzt wurde. Dazu wird der Merker 22 nach vollständiger Erzeugung der Liste 20 auf einen ersten Wert, z.B. "0", und nach Zuführung eines neuen oder geänderten Terms 9 auf einen vom ersten Wert verschiedenen zweiten Wert, z.B. "1", gesetzt.

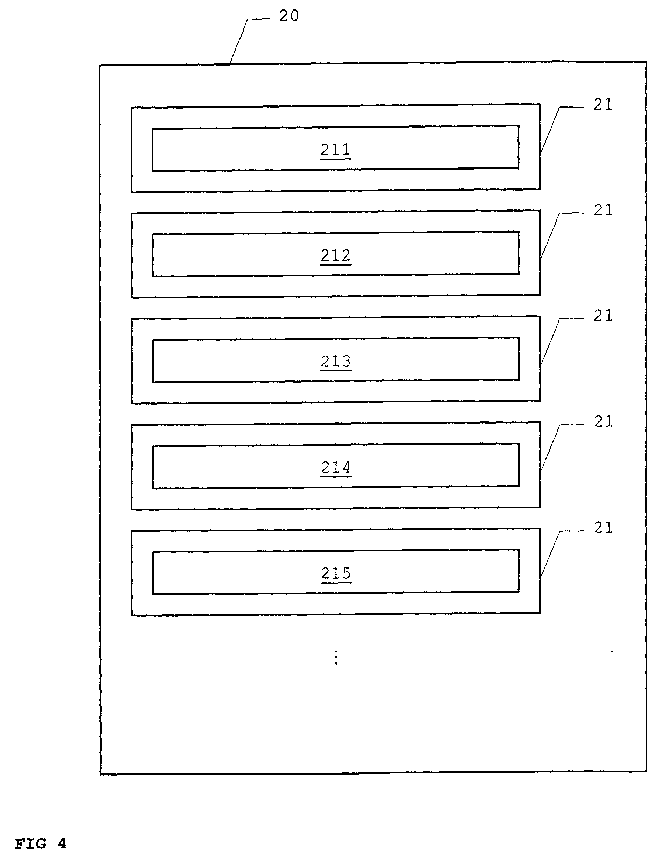

FIG 4 zeigt die Liste 20 mit einigen Listenelementen 21. Zur Veranschaulichung des Inhalts 211, 212, 213, 214, 215 der Listenelemente 21 wird davon ausgegangen, dass diese vom Parser 14 anhand des Terms 9 "x = a×b + c" generiert wurde. Das erste Listenelement 21 dient dann dazu, eine Zwischenspeicherung des Parameters 12 "a" vorzunehmen. Der Inhalt 211 des betreffenden Listenelementes 21 könnte etwa lauten: "a SICHEREN" oder "LDA A". Damit wird der Wert des Parameters 12 "a" in eine spezielle Speicherzelle (nicht dargestellt) geschrieben.

Die spezielle Speicherzelle, in die der Wert des Parameters 12 "a" geschrieben wurde, zeichnet sich dadurch aus, dass ihre Adressierung durch bestimmte Prozessoranweisungen implizit erfolgt (vgl. Schneider, Werner: Taschenbuch der Informatik, Carl Hanser Verlag, 2001). Die spezielle Speicherzelle wird bei gebräuchlichen Prozessoren 2 auch als "Akkumulator" bezeichnet. Diese Benennung wird auch im folgenden verwendet. Der Akkumulator ist üblicherweise ein Register des Prozessors 2.

Aufgrund der impliziten Adressierung des Akkumulators sind z.B. Prozessorbefehle zur Realisierung der mathematischen Grundrechenarten als so genannte Einadressbefehle ausgeführt. Die Multiplikation der Parameter 12 "a" und "b" erfordert zunächst das Ablegen des Parameters 12 "a" im Akkumulator. Daraufhin wird mit dem Parameter 12 "b" der Prozessorbefehl zur Durchführung einer Multiplikation aufgerufen; z.B. als "MUL [b]". Dies löst der Prozessor 2 zu einer Operation wie folgt auf:
Akkumulator := Akkumulator MUL b,
was, wenn der Akkumulator zunächst den Wert des Parameters 12 "a" enthält, genau der Multiplikation der Werte der beiden Parameter 12 "a" und "b" entspricht
(Akkumulator := a MUL b),
wobei das Multiplikationsergebnis im Akkumulator gespeichert und in gleicher oder ähnlicher Weise zur Verknüpfung mit weiteren Parametern 12 zur Verfügung steht.

Aus dem zuvor Beschriebenen wird deutlich, dass das zweite Listenelement 21 dazu dient, die Verknüpfung des zweiten Parameters 12 "b" mit dem Inhalt Akkumulators zu bewirken. Der Inhalt 212 des betreffenden Listenelementes 21 könnte etwa lauten: "b MULTIPLIZIEREN " oder "MUL b". Damit wird der Wert des Parameters 12 "b" mit dem Inhalt des Akkumulators multipliziert und das Ergebnis wiederum in den Akkumulator geschrieben.

Das dritte Listenelement 21 dient schließlich dazu, zu dem bisherigen Multiplikationsergebnis den Wert des Parameters 12 "c" zu addieren. Der Inhalt 213 des betreffenden Listenelementes 21 könnte etwa lauten: "c ADDIEREN" oder "ADD c". Damit wird der Wert des Parameters 12 "c" zum Inhalt des Akkumulators addiert und das Ergebnis wiederum in den Akkumulator geschrieben. Damit steht das Ergebnis der mathematischen Funktion 10 jetzt im Akkumulator zur Verfügung.

Die Inhalte 211, 212, 213 der Elemente 21 der Liste 20 - hintereinander geschrieben - "a SICHERN", "b MULTIPLIZIEREN", "c ADDIEREN" korrespondieren mit der Postfixdarstellung "a b × c +" des ursprünglichen Terms 9 "a × b + c", so dass die Liste 20 eine Postfixdarstellung des Terms 9 beinhaltet und der Parser 14 bei der Generierung der Liste 20 eine geeignete Postfixdarstellung des Terms 9 generiert.

Die letzte für die exemplarisch gewählte mathematische Funktion 10 noch ausstehende Operation ist das Kopieren des Inhalts des Akkumulators in die Speicherzelle 11, die das Funktionsergebnis 11 "x" repräsentiert. Mit dem vierten Listenelement 21 wird entsprechend ein solcher Kopiervorgang initiiert. Der Inhalt 214 des betreffenden Listenelementes 21 könnte etwa lauten: "KOPIERE x", wobei natürlich die Besonderheiten der direkten oder indirekten Adressierung zu beachten sind.

Der Inhalt 211-214 der jeweiligen Listenelemente 21 entspricht also entweder direkt einer vom Prozessor 2 ausführbaren Anweisung oder hat zumindest eine Form, die eine direkte Transformation in eine vom Prozessor 2 ausführbare Anweisung ermöglicht. Die Begriffe 'Anweisung', 'Listenelement' 21 oder 'Listenelementinhalt' 211-214 bezeichnen damit in dieser Beschreibung letztlich gleiche "Gegenstände" in ggf. unterschiedlicher Darstellungsform.

Bei komplexeren Termen, speziell bei solchen Termen, bei deren Berechnung die Speicherung von Teil- oder Zwischenergebnissen erforderlich ist, ist neben dem Akkumulator zur Speicherung eines jeden Zwischenergebnisses noch jeweils mindestens eine weitere Speicherzelle erforderlich. Diese Speicherzellen sind vorteilhaft in Form eines so genannten Stapelspeichers organisiert.

Eine mathematische Funktion 10, welche die Zwischenspeicherung von Teilergebnissen erfordert ist z.B. eine Funktion 10 der Form "x = a×b + c×d" Hier muss zuerst das Produkt der Parameter 12 "a" und "b" und danach das Produkt der Parameter 12 "c" und "d" gebildet werden. Beide Produkte stellen Teilergebnisse der Funktion 10 dar. Das Funktionsergebnis 11 ergibt sich durch Addition der beiden Teilergebnisse. Die Ermittlung jedes Teilergebnisses erfolgt separat unter Verwendung des Akkumulators:
"SICHERE a" ; Akkumulator := a
"MULTIPLIZIERE mit b" ; Akkumulator := Akkumulator × b

Das erste Teilergebnis steht damit im Akkumulator zur Verfügung, würde aber verloren gehen, wenn sofort mit der Berechnung des zweiten Teilergebnisses begonnen würde. Daher wird der Inhalt des Akkumulators in einem Stapelspeicher gesichert (PUSH), so dass der Stapelspeicher zumindest ein Element umfasst, dessen Inhalt dem ersten Teilergebnis entspricht. Jetzt kann das zweite Teilergebnis berechnet werden. Zweckmäßig - allerdings nicht notwendig - wird auch der sich damit ergebende Inhalt des Akkumulators als zweites Teilergebnis in dem Stapelspeicher gesichert (PUSH). Der Stapelspeicher hat jetzt mindestens zwei Elemente, wobei der Inhalt des neuen, zweiten Elements dem zweiten Teilergebnis entspricht.
"SICHERE a" ; Akkumulator : = a
"MULTIPLIZIERE mit b" ; Akkumulator := Akkumulator × b
PUSH
"SICHERE c" ; Akkumulator := c
"MULTIPLIZIERE mit d" ; Akkumulator := Akkumulator × d
PUSH

Stapelspeicher und deren Verwendung sind allgemein bekannt, so dass hier auf nähere Erläuterungen zu Aufbau, Funktion und Verwendung verzichtet werden kann.

Zur Ermittlung des Funktionsergebnisses 11 werden die Teilergebnisse aus dem Stapelspeicher wieder abgerufen und dabei jeweils der Stapelspeicher in üblicher Weise abgebaut (POP). D.h. zunächst wird das "oberste" - das zweite - Element aus dem Stapelspeicher abgerufen und in den Akkumulator geladen. Zur Vereinfachung solcher Operationen verwaltet jeder Prozessor 2 einen so genannten Stapelzeiger oder Stackpointer (SP). Der Stapelzeiger "zeigt" (adressiert) auf das jeweils oberste Element des Stapels. Wenn der Stapel abgebaut wird und dabei zunächst das oberste - das zweite - Element in den Akkumulator geladen wird, kann zu dessen Inhalt der Inhalt der Speicherzelle, auf die der Stackpointer dann zeigt (das erste Element) in der oben gezeigten Weise addiert werden. Das Funktionsergebnis 11 steht schließlich wieder im Akkumulator zur Verfügung.

### Damit lässt sich die Erfindung kurz wie folgt darstellen:

Es wird ein Verfahren zum Betrieb eines Rechnersystems 1 mit einem Prozessor 2 und einem Funktionsbaustein 8 sowie ein Funktionsbaustein 8 selbst angegeben, wobei der Funktionsbaustein 8 einen Parser 14 und einen Termeingang 15 aufweist, wobei dem Funktionsbaustein 8 am Termeingang 15 ein Term 9 zugeführt wird, wobei der Parser 14 anhand des Terms 9 eine Liste 20 mit mindestens einem Listenelement 21 erzeugt und wobei jedes Listenelement 21 in eine vom Prozessor 2 ausführbare Anweisung transformiert wird.

## Patentansprüche

1. Verfahren zum Betrieb eines Rechnersystems (1) mit einem Prozessor (2) und einem Funktionsbaustein (8),
- wobei der Funktionsbaustein (8) einen Parser (14) und einen Termeingang (15) aufweist,
- wobei dem Funktionsbaustein (8) am Termeingang (15) ein Term (9) zugeführt wird,
- wobei der Parser (14) anhand des Terms (9) eine Liste (20) mit mindestens einem Listenelement (21) erzeugt und
- wobei jedes Listenelement (21) in eine vom Prozessor (2) ausführbare Anweisung transformiert wird.

2. Verfahren nach Anspruch 1,
wobei jedes Listenelement (21) eine vom Prozessor (2) ausführbare Anweisung beinhaltet.

3. Verfahren nach Anspruch 1 oder 2,
wobei die Liste (20) eine Postfixdarstellung des Terms (9) ist.

4. Verfahren nach Anspruch 1, 2 oder 3,
wobei der Funktionsbaustein (8) mindestens einen ersten Ausgang (16) aufweist,
wobei die sukzessive Ausführung einer jeden Anweisung ein Ergebnis (11) liefert und
wobei das Ergebnis (11) am ersten Ausgang (16) abgerufen wird.

5. Verfahren nach Anspruch 4,
wobei in Abhängigkeit vom Ergebnis (11) zumindest ein weiterer Ausgang (18) generiert wird.

6. Verfahren nach einem der obigen Ansprüche,
wobei sich jede Anweisung entweder auf eine spezielle Speicherzelle oder auf einen Stapelspeicher bezieht und durch eine Ausführung einer Anweisung, die sich auf den Stapelspeicher bezieht, entweder ein Datum in dem Stapelspeicher abgelegt oder aus dem Stapelspeicher entfernt wird.

7. Verfahren nach Anspruch 6,
wobei der Term (9) mindestens einen Parameter (12) umfasst und wobei jeder Parameter (12) zu einer Anweisung führt, mit der der Wert des Parameters (12) entweder in die spezielle Speicherzelle geschrieben wird oder mit deren Inhalt verknüpft wird.

8. Verfahren nach Anspruch 7,
wobei der Term (9) mindestens einen Operator (13) umfasst und jeder Operator (13) zu einer Anweisung führt, mit der der Wert eines zugehörigen Parameters (12) mit dem aktuellen Inhalt der speziellen Speicherzelle verknüpft wird.

9. Verfahren nach Anspruch 6, 7 oder 8,
wobei, wenn zur Berechnung des Ergebnisses (11) die Ermittlung eines Teilergebnisses erforderlich ist, das Teilergebnis im Stapelspeicher abgelegt wird.

10. Verfahren nach Anspruch 7,
wobei der Funktionsbaustein (8) mindestens einen Parametereingang (17) aufweist und der mindestens eine Parameter (12) am Parametereingang (17) zugeführt wird.

11. Verfahren nach Anspruch 10,
wobei für jeden weiteren Parameter (12) des Terms (9) jeweils genau ein zusätzlicher weiterer Parametereingang (17') generiert wird.

12. Verfahren nach einem der obigen Ansprüche,
wobei der Funktionsbaustein (8) einen Merker (22) umfasst, der nach vollständiger Erzeugung der Liste (20) auf einen ersten Wert und nach Zuführung eines neuen oder geänderten Terms (9) auf einen zweiten Wert gesetzt wird.

13. Funktionsbaustein (8) mit einem Parser (14) und einem Termeingang (15) zur Verwendung in einem durch einen Prozessor (2) gesteuerten Rechnersystem (1),
- wobei am Termeingang (15) ein Term (9) zuführbar ist,
- wobei der Term (9) durch den Parser (14) analysierbar und in eine Liste (20) mit mindestens einem Listenelement (21) umsetzbar ist und
- wobei jedes Listenelement (21) in eine vom Prozessor (2) ausführbare Anweisung transformierbar ist.

14. Funktionsbaustein nach Anspruch 13,
mit mindestens einem ersten Ausgang (16),
an dem ein durch sukzessive Ausführung einer jeden Anweisung erhaltenes Ergebnis (11) abrufbar ist.

15. Funktionsbaustein nach Anspruch 14,
wobei in Abhängigkeit vom Ergebnis (11) zumindest ein weiterer Ausgang (18) generierbar ist.

16. Funktionsbaustein nach Anspruch 13, 14 oder 15,
mit mindestens einem Parametereingang (17),
wobei der Term (9) mindestens einen Parameter (12) umfasst und wobei der Parameter (12) am Parametereingang (17) zuführbar ist.

17. Funktionsbaustein nach Anspruch 16,
wobei für jeden weiteren Parameter (12) des Terms (9) ein weiter Parametereingang (17') generierbar ist.

18. Funktionsbaustein nach Anspruch 13, 14, 15, 16 oder 17, mit einem Merker (22), dem nach vollständiger Erzeugung der Liste (20) ein erster Wert und nach Zuführung eines neuen oder geänderten Terms (9) ein zweiter Wert zuweisbar ist.
